# EUROPEAN PATENT APPLICATION

(11) **EP 1 990 904 A2**
(43) Date of publication of application: **12.11.2008**
(21) Application number: 07123784.6
(22) Date of filing: 20.12.2007
(51) Int. Cl.: H02M 3/335

(54) **Power supply apparatus for a plasma display device**

(30) Priority: 18.01.2007 KR 20070005659
(71) Applicant: Samsung SDI Co., Ltd., Suwon-si Gyeonggi-do (KR)
(72) Inventor: YOON, Bong-Eun, Gyeonggi-do (KR); JIN, Kyong-Pil, Gyeonggi-do (KR)
(74) Representative: Hengelhaupt, Jürgen

(57) **Abstract**

A plasma display device and a power supply thereof is provided. The power supply includes a power supply unit, a first output unit, a second output unit and a converter. The power supply unit includes a switching transistor, which is coupled to a primary coil of a transformer for transforming an input voltage, and provides power to a first secondary coil and a second secondary coil of the transformer according to operation of the switching transistor. The first output unit outputs a first voltage generated at the first secondary coil of the transformer, and a second voltage generated by decreasing the first voltage. The second output unit outputs a third voltage generated at the second secondary coil. The converter generates fourth and fifth voltages by converting a voltage that is higher than the second voltage and is generated by using the first and second voltages.

## Description

### BACKGROUND OF THE INVENTION

### (a) Field of the Invention

The present invention relates to plasma display devices and, more particularly, to a power supply for a plasma display device.

### (b) Description of the Related Art

A plasma display device typically includes a plasma display panel (PDP) that uses plasma generated by a gas discharge process to display characters or images. The PDP can include, depending on its size, up to millions of pixels arranged in a matrix pattern.

In general, duration of a frame for driving all of the pixels of a PDP is divided into a plurality of subfields, each having a weight. Gray scales are expressed by the combination of weights of those subfields, from among all the subfields, at which a discharge is generated and a display operation is conducted. Turn-on/turn-off cells (i.e., cells to be turned on or off) are selected during an address period of each subfield, and a sustain discharge operation is performed in the turn-on cells so as to display an image during a sustain period.

Accordingly, a conventional plasma display device includes two power supplies to generate voltages having different levels that are applied to the turn-on and turn-off cells during the address period. Since it is difficult to reduce the number of constituent elements and increase integration in such a configuration, a power supply for supplying at least two voltages by using a single voltage generator has been suggested.

However, the power supply for supplying at least two voltages by using a single voltage generator has a quick current response speed so that an integrated circuit receiving the voltage generated by the voltage generator problematically generates heat, and therefore easily deteriorates the integrated circuit.

### SUMMARY OF THE INVENTION

In accordance with embodiments of the present invention a plasma display device, and a power supply thereof, are provided for generating a plurality of voltages by using one single voltage generating circuit and reducing circuit deterioration caused by heat.

According to a first aspect of the invention, a power supply for driving a plasma display device is provided. The power supply comprises a power supply unit, a first output unit, a second output unit, and a converter. The power supply unit has a switching transistor connected to a primary coil of a transformer adapted to transform an input voltage and to supply power to a first secondary coil and a second secondary coil of the transformer in response to an operation of the switching transistor. The first output unit includes the first secondary coil of the transformer and is adapted to output a first voltage and a second voltage lower than the first voltage. The first and second voltages are generated at the first secondary coil. The second output unit includes the second secondary coil of the transformer and is adapted to output a third voltage generated at the second secondary coil. The converter is coupled to the first output unit and adapted to convert the first voltage into a fourth voltage and to output the second voltage as a fifth voltage lower than the fourth voltage.

Preferably, the converter includes a pulse width modulation controller, a converter output unit, and a converter feedback signal generator. The pulse width modulation controller is adapted to convert the first voltage in response to a level of a sixth voltage and to output an AC voltage. The converter output unit is connected to the pulse width modulation controller and has a fourth coil configured to receive the AC voltage at a first terminal of the fourth coil and a first capacitor having a first terminal connected to a second terminal of the fourth coil. The fourth coil and the first capacitor are adapted to rectify the AC voltage and to generate the fourth voltage. The converter feedback signal generator is adapted to generate the sixth voltage from the fourth voltage and to transmit the sixth voltage to the pulse width modulation controller.

The power supply may further comprise a power supply feedback signal generator and a switching controller. The power supply feedback signal generator is connected to the first output unit and to the second output unit and adapted to receive the third voltage and the fifth voltage and to generate a feedback signal. The switching controller is connected between the power supply feedback signal generator and the power supply unit and adapted to control a turn-on/off operation of the switching transistor in response to the feedback signal.

The fifth voltage may be lower than the first voltage.

The first voltage may be a ground voltage.

The sixth voltage may be lower than the first voltage.

A second aspect of the invention provides a plasma display device comprising first electrodes, second electrodes, and third electrodes formed in a direction crossing the first electrodes and the second electrodes, a sustain electrode driver adapted to drive the first electrodes, a scan electrode driver adapted to drive the second electrodes, an address electrode driver adapted to drive the third electrodes, a controller, and a power supply according to the first aspect of the invention. The controller is adapted to control the sustain electrode driver, the scan electrode driver, and the address electrode driver. The power supply is adapted to supply power to the sustain electrode driver, the scan electrode driver, and the address electrode driver.

The input voltage of the power supply may be a seventh voltage higher than an eighth voltage, wherein the seventh voltage and the eighth voltage are alternately applied to the first electrodes during a sustain period.

The fifth voltage may be a scan voltage sequentially applied to the first electrodes during an address period.

### BRIEF DESCRIPTION OF THE DRAWINGS

FIG. 1 shows a block diagram representing a plasma display device according to an exemplary embodiment of the present invention.
FIG. 2 shows a diagram representing driving waveforms of the plasma display device according to the exemplary embodiment of the present invention.
FIG. 3 shows a diagram representing a scan electrode driving voltage generator according to the exemplary embodiment of the present invention.
FIG. 4 shows a schematic diagram of a converter according to the exemplary embodiment of the present invention.

### DETAILED DESCRIPTION OF THE EMBODIMENTS

Throughout this specification and the claims which follow, when it is described that an element is "connected" to another element, the element may be "directly connected" to the other element or "indirectly connected" to the other element through a third element.

In addition, wall charges mentioned in the following description mean charges formed and accumulated on a wall (e.g., a dielectric layer) close to an electrode of a discharge cell. A wall charge will be described as being "formed" or "accumulated" on the electrode, although the wall charges do not actually touch the electrodes. Further, a wall voltage means a potential difference formed on the wall of the discharge cell by the wall charge.

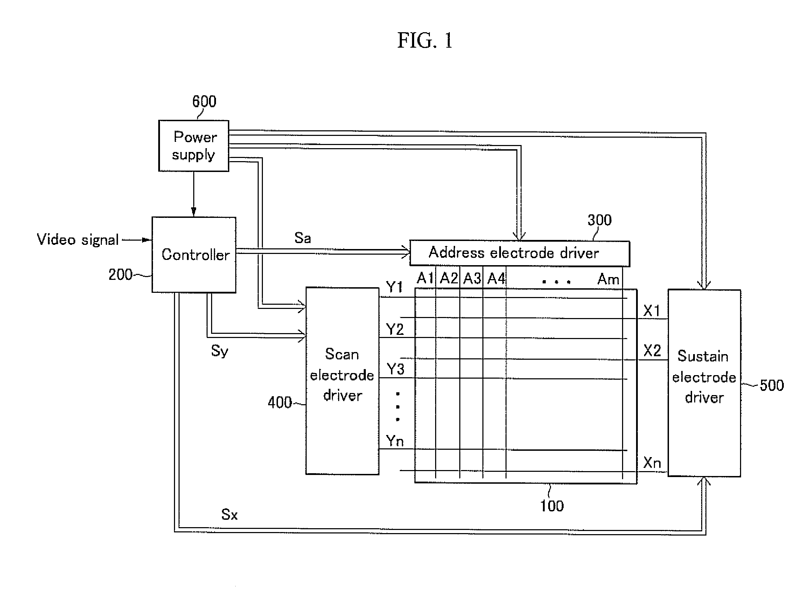

Referring now to FIG. 1, a plasma display device according to an exemplary embodiment of the present invention includes a PDP 100, a controller 200, an address electrode driver 300, a scan electrode driver 400, a sustain electrode driver 500, and a power supply 600.

The PDP 100 includes a plurality of address electrodes A1 to Am extending in a column direction, and a plurality of sustain and scan electrodes X1 to Xn and Y1 to Yn in pairs extending in a row direction. The sustain electrodes X1 to Xn are formed in respective correspondence to the scan electrodes Y1 to Yn, and ends of the sustain electrodes X1 to Xn are connected in common. In addition, the PDP 100 includes a substrate (not shown) having the sustain and scan electrodes X1 to Xn and Y1 to Yn, and a substrate (not shown) having the address electrodes A1 to Am. The two substrates are arranged to face each other with a discharge space between them so that the scan electrodes Y1 to Yn and the sustain electrodes X1 to Xn may cross the direction of the address electrodes A1 to Am. Discharge spaces provided at crossing regions of the address electrodes, A, and sustain and scan electrodes, X and Y, form discharge cells. The above-described structure for the plasma display panel 100 is an example, and other panel structures may also be used in the embodiments of the present invention.

The controller 200 receives external video signals, and outputs an address driving control signal Sa, a sustain electrode driving control signal Sx, and a scan electrode driving control signal Sy. In addition, the controller 200 divides a frame into a plurality of subfields. Each subfield has a reset period, an address period, and a sustain period.

After receiving the address driving control signal Sa from the controller 200, the address electrode driver 300 applies a display data signal for selecting the discharge cells to be used in forming the image to the corresponding address electrodes A1 to Am.

The scan electrode driver 400 receives the scan electrode driving control signal Sy from the controller 200, and applies a driving voltage to the scan electrode Y.

The sustain electrode driver 500 receives the sustain electrode driving control signal Sx from the controller 200, and applies a driving voltage to the sustain electrode X.

The power supply 600 provides a power source for driving the plasma display device to the controller 200, and the drivers 300, 400, 500.

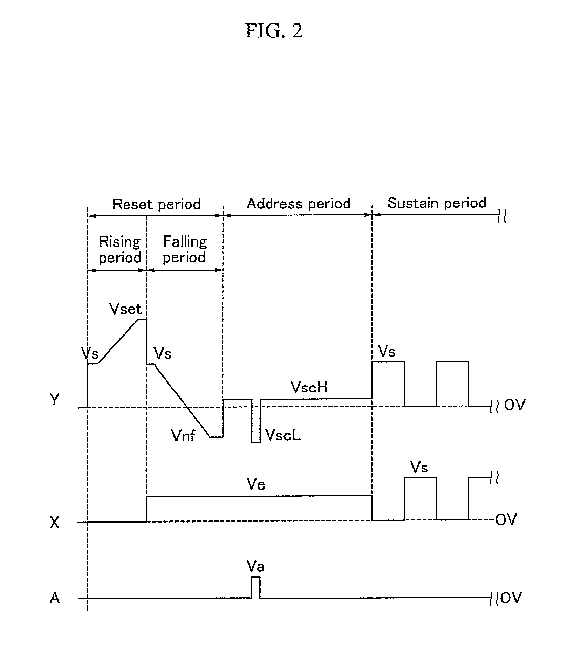

FIG. 2 shows a diagram representing driving waveforms of the plasma display device according to one exemplary embodiment of the present invention.

In FIG. 2, the driving waveforms for one subfield of the PDP 100 shown in FIG. 1 are illustrated, and the one subfield includes the reset, address, and sustain periods. Variation of the voltage applied to the sustain X, scan Y and address A electrodes is controlled by the controller 200 shown in FIG. 1. The voltages applied to the electrodes determine the reset, address and sustain operations.

The reset period includes a rising period and a falling period. During the rising period, while the address electrode A and the sustain electrode X are maintained at a reference voltage (0V in FIG. 2), a voltage at the scan electrode Y is gradually increased from a Vs voltage to a Vset voltage. Since the voltage at the scan electrode Y is increased, a weak discharge is generated between the scan electrode Y and the sustain electrode X and between the scan electrode Y and the address electrode A. Therefore, (-) wall charges are formed on the scan electrode Y, and (+) wall charges are formed on the sustain electrode X and the address electrode A. A sum of a wall voltage of each electrode, the wall voltage caused by the wall charges formed when the voltage at the scan electrode Y reaches a Vset voltage, and an external voltage is equal to a level of a discharge firing voltage Vf. A state of each cell is initialized during the reset period, and therefore the Vset voltage is set high enough to generate a discharge in the cell. In addition, as seen in FIG. 2, the voltage at the scan electrode Y is increased or decreased in a ramp pattern. However, the waveform is not limited to a ramp pattern and the voltage applied may gradually increase in another manner, e.g. logarithmically.

During the falling period, while the address electrode A and the sustain electrode X are respectively maintained at the reference voltage and a Ve voltage, the voltage at the scan electrode Y is gradually decreased from the Vs voltage to the Vnf voltage. Since the voltage at the scan electrode Y is decreased, a weak discharge is generated between the scan electrode Y and the sustain electrode X and between the scan electrode Y and the address electrode A. Therefore, most of the (-) wall charges formed on the scan electrode Y and the (+) wall charges formed on the sustain and address electrodes X and A during the rising period are eliminated. Accordingly, the (-) wall charges on the scan electrode Y and the (+) wall charges on the sustain electrode X and the address electrode A are reduced. In this case, the (+) wall charge on the address electrode A is reduced to a degree sufficient for performing an address operation. In general, the voltage of (Vnf-Ve) is set to be the firing voltage Vfxy between the scan electrode Y and the sustain electrode X. Accordingly, the wall voltage between the scan electrode Y and the sustain electrode X becomes almost 0V, and the cells to be turned off in the address period are prevented from being misfired in the sustain period.

At least one falling period of the reset period is included in each subfield. However, the rising period may be optional for some subfields. A control program of the controller 200 shown in FIG. 1, determines whether the rising period is included in a particular subfield.

During the address period, to select a light emitting cell, while the Ve voltage is applied to the sustain electrode X, a scan pulse having a VscL voltage (i.e., a scan voltage) is sequentially applied to the plurality of scan electrodes Y. At the same time, an address voltage Va is applied to the address electrode A that passes through the light emitting cell among a plurality of cells formed by the scan electrode Y receiving the VscL voltage. Accordingly, since an address discharge is generated between the address electrode A receiving the address voltage and the scan electrode Y receiving the VscL voltage and between the scan electrode Y receiving the VscL voltage and the sustain electrode X corresponding to the scan electrode Y receiving VscL voltage, the (+) wall charges are formed on the scan electrode Y and the (-) wall charges are formed on the respective address and sustain electrodes A and X. In this case, the VscL voltage is set to be equal to or lower than the Vnf voltage. In addition, a VscH voltage (i.e., a non-scan voltage) that is higher than the VscL voltage is applied to the scan electrodes Y not receiving the VscL voltage, and a reference voltage is applied to the address electrodes A of the discharge cells that are not selected as turn-on cells.

During the sustain period, a sustain pulse alternately having a high level voltage (the Vs voltage shown in FIG. 2) and a low level voltage (the 0V voltage shown in FIG. 2) is alternately applied to the scan electrode Y and the sustain electrode X. That is, the OV voltage is applied to the sustain electrode X when the Vs voltage is applied to the scan electrode Y, and the OV voltage is applied to the scan electrode Y when the Vs voltage is applied to the sustain electrode X, and a discharge is generated between the scan electrode Y and the sustain electrode X by the Vs voltage and the wall voltage that is formed between the scan electrode Y and the sustain electrode X by the address discharge. The sustain pulse is applied to the scan electrode Y and the sustain electrode X a number of times that corresponds to a weight of the corresponding subfield.

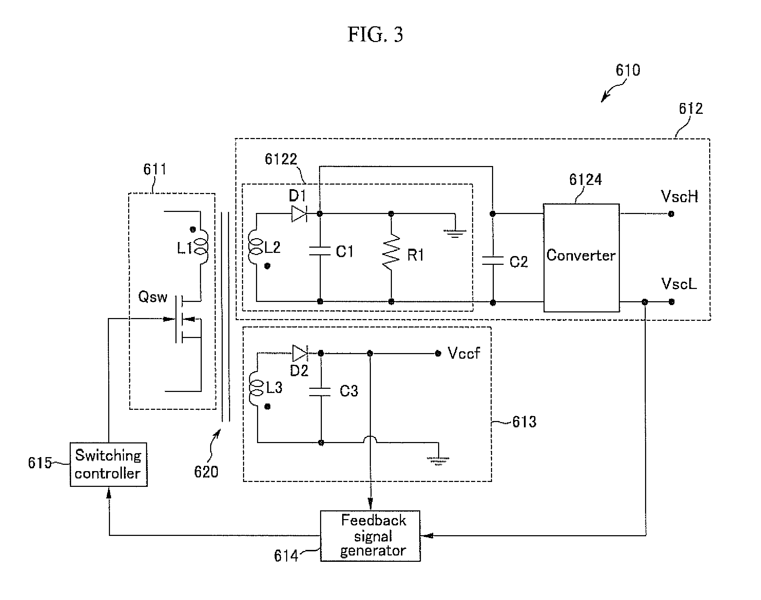

A scan electrode driving voltage generator according to the exemplary embodiments of the present invention in the power supply 600 shown in FIG. 1 will now be described with reference to FIG. 3.

FIG. 3 shows a diagram representing the scan electrode driving voltage generator 610 according to an exemplary embodiment of the present invention.

As shown in FIG. 3, the scan electrode driving voltage generator 610 according to the exemplary embodiment of the present invention includes a power supply unit 611, a scan voltage generator 612, a driver voltage generator 613, a feedback signal generator 614, and a switching controller 615. The feedback signal generator 614 may also be referred to as a power supply feedback generator 614.

The power supply unit 611 includes a primary coil L1 of a transformer 620 and a switching transistor Qsw coupled to the primary coil L1. The power supply unit 611 receives the Vs voltage and provides power to a secondary side of the transformer 620 (i.e., the scan voltage generator 612 and the driver voltage generator 613) according to duty cycle of the switching transistor Qsw.

The scan voltage generator 612 includes a reference voltage generator 6122 and a converter 6124. The reference voltage generator 6122 may be referred to as a first output unit 6122. And, the driver voltage generator 613 may also be referred to as a second output unit 613.

The reference voltage generator 6122 includes a secondary coil L2 of the transformer, a diode D1 having its anode coupled to a terminal of the secondary coil L2, a capacitor C1 having one terminal coupled to a cathode of the diode D1, and a resistor R1 including a terminal coupled to a common node between the diode D1 and the capacitor C1 and another terminal coupled to the other terminal of the capacitor C1.

The reference voltage generator 6122 uses the diode D1 and the capacitor C1 to convert a voltage, which is induced from the primary coil L1 and generated at the secondary coil L2 according to a turn-on/off operation of the switching transistor Qsw, to a direct current voltage, and outputs the direct current voltage as a reference voltage GND.

The converter 6124 for generating and outputting the VscH voltage and the VscL voltage includes two input terminals each coupled to one of the two terminals of a capacitor C2. The capacitor C2 is coupled in parallel with the capacitor C1.

The converter 6124 uses a voltage input through the reference voltage generator 6122 to output the scan voltages VscH and VscL.

The driver voltage generator 613 for generating a power source voltage of the scan electrode driver 400 shown in FIG. 1 includes a secondary coil L3 of the transformer 620, a diode D2 having its anode coupled to a terminal of the secondary coil L3, and a capacitor C3 coupled between a cathode of the diode D2 and a ground. A voltage applied between the two terminals of the capacitor C3 is a scan electrode driver driving voltage Vccf. The feedback voltage Vccf is output from the driver voltage generator 613. The secondary coil L2 of the reference voltage generator 6122 may be referred to as a first secondary coil L2 and the secondary coil L3 of the driver voltage generator 613 may be referred to as a second secondary coil L3.

The feedback signal generator 614 is coupled to output terminals of the converter 6124 and the driver voltage generator 613, receives output voltages of the converter 6124 and the driver voltage generator 613, and generates a feedback signal.

The switching controller 615 receives the feedback signal generated by the feedback signal generator 614, and controls the turn-on/off operation of the switching transistor Qsw in the power supply unit 611 to control output voltages of the scan voltage generator 612 and the driver voltage generator 613.

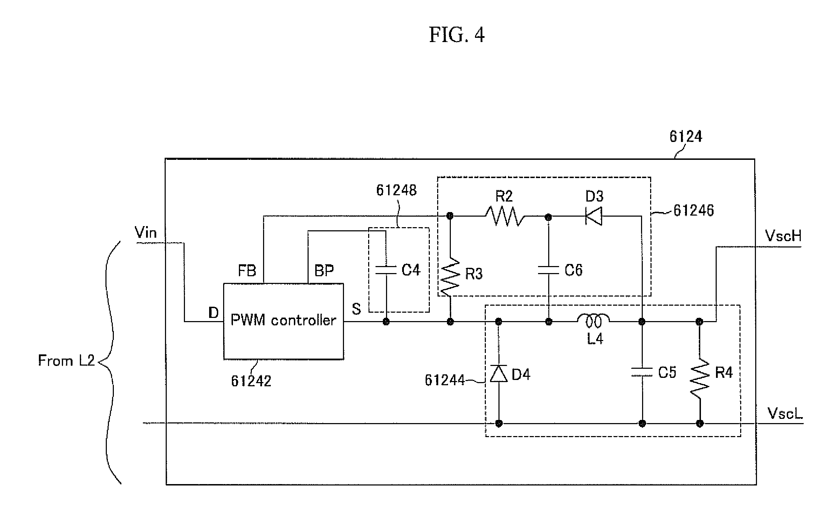

The converter 6124 in the scan voltage generator 612 will now be described with reference to FIG. 4.

FIG. 4 shows a schematic diagram of the converter 6124 according to an exemplary embodiment of the present invention.

As shown in FIG. 4, the converter 6124 according to the exemplary embodiment of the present invention is a non-isolated switching mode power supply (SMPS). It includes a pulse width modulation (PWM) controller 61242, an converter output unit 61244, a converter feedback signal generator 61246, and a bias voltage supply unit 61248.

The PWM controller 61242 may be realized by one integrated circuit (IC), and it includes four input terminals including a drain terminal D, a source terminal S, a bypass terminal BP, and a feedback terminal FB. The PWM controller 61242 may also include a PWM switching transistor (not shown), and a PWM switching controller (not shown) for controlling a turn-on/off operation of the PWM switching transistor.

The drain terminal D for receiving an input voltage Vin of the converter 6124 is coupled to a node of the capacitor C1 and the capacitor C2 (FIG. 3). The source terminal S outputs an output signal to the converter output unit 61244 according to the turn-on/off operation of the PWM switching transistor (not shown). The bypass terminal BP is coupled to the bias voltage supply unit 61248 and receives a driving voltage of the PWM switching controller (not shown) for controlling the turn-on/off operation of the PWM switching transistor (not shown). The feedback terminal FB receives a feedback voltage from the converter feedback signal generator 61246.

The converter output unit 61244 includes a diode D4 including a cathode coupled to the source terminal S of the PWM controller 61242, an inductor L4 including a terminal coupled to the cathode of the diode D4, a capacitor C5 including a terminal coupled to another terminal of the inductor L4 and another terminal coupled to an anode of the diode D1, and a resistor R4 coupled in parallel to the two terminals of the capacitor C5. Among voltages applied to the two terminals of the resistor R4, a higher voltage is the VscH voltage, and a lower voltage is the VscL voltage.

The converter feedback signal generator 61246 includes a diode D3 having its anode coupled to one terminal of the inductor L4 in the converter output unit 61244, a capacitor C6 including a terminal coupled to a cathode of the diode D3 and a second terminal coupled to the other terminal of the inductor L4, a resistor R2 including a terminal coupled to the node formed between the cathode of the diode D3 and the capacitor C6 and another terminal coupled to the feedback terminal FB of the PWM controller 61242, and a resistor R3 including a terminal coupled to the feedback terminal FB of the PWM controller 61242 and another terminal coupled to a node formed between the source terminal S of the PWM controller ra1242 and the cathode of the diode D4.

The converter feedback signal generator 61246 rectifies a voltage applied to the inductor L4 in the converter output unit 61244 by using the diode D3 and the capacitor C6, divides the rectified voltage by using the resistors R2 and R3, and transmits the divided voltages to the feedback terminal FB of the PWM controller 61242.

The bias voltage supply unit 61248 includes a capacitor C4 having one terminal coupled to the source terminal S of the PWM controller 61242 and another terminal coupled to the bypass terminal BP. In addition, the bias voltage supply unit 61248 uses the input voltage Vin input through the drain terminal D when the PWM switching transistor (not shown) of the PWM controller 61242 is turned off, charges the capacitor C4 coupled to the bypass terminal BP, and drives the PWM switching controller (not shown) of the PWM controller 61242 for controlling the PWM switching transistor (not shown).

The converter 6124 includes a feedback loop through the converter feedback signal generator 61246, and therefore, the VscH voltage and the VscL voltage may be precisely controlled. The converter output unit 61244 of the converter 6124 rectifies an AC voltage, which is output from the PWM controller 61242, by the inductor L4 and the capacitor C5, and outputs the scan voltages VscH, VscL having different voltage levels by the resistor R4. When receiving the AC voltage, the inductor L4 delays outputting the voltage. The duration of delay may be predetermined. Accordingly, a response speed of the scan voltages VscH and VscL output through the scan electrode driving voltage generator according to the exemplary embodiment of the present invention is reduced. In addition, since a charging and discharging speed of a scan IC operating by receiving the scan voltages VscH and VscL is reduced, heat problematically generated by a quick charging and discharging operation is reduced and circuit deterioration resulting from generated heat may be reduced or prevented.

In another embodiment of the present invention, different from the embodiment shown in FIG. 3, an isolated switching mode power supply using a transformer including at least two inductors may be used for the reference voltage generator 6122 rather than using the non-isolated switching mode power supply. In this case, also, generation of heat and circuit deterioration may be reduced or prevented, and the scan voltages VscH and VscL may be controlled.

In addition, the scan electrode driving voltage generator according to the exemplary embodiment of the present invention may be used as a sustain electrode driving voltage generator for driving the sustain electrode X. The sustain voltages, for example Vs and 0V, may be generated by the scan electrode driving voltage generator and alternately applied to the sustain electrodes X and the scan electrodes Y during the sustain period.

As described above, according to the exemplary embodiments of the present invention, since at least two voltages are generated by using one single voltage generating circuit, a layout area may be reduced, and circuit deterioration caused by heat may be prevented.

## Claims

1. A power supply (610) for driving a plasma display device, the power supply comprising:
a power supply unit (611) having a switching transistor (Qsw) connected to a primary coil (L1) of a transformer (620) adapted to transform an input voltage and to supply power to a first secondary coil (L2) and a second secondary coil (L3) of the transformer (620) in response to an operation of the switching transistor (Qsw);
a first output unit (6122) including the first secondary coil (L2) of the transformer (620), the first output unit (6122) being adapted to output a first voltage (Vin) and a second voltage, the second voltage being lower than the first voltage (Vin), generated at the first secondary coil (L2);
a second output unit (613) including the second secondary coil (L3) of the transformer (620), the second output unit (613) being adapted to output a third voltage (Vccf) generated at the second secondary coil (L3); and
a converter (6124) coupled to the first output unit (6122) and being adapted to convert the first voltage (Vin) into a fourth voltage (VscH) and to output the second voltage as a fifth voltage (VscL) lower than the fourth voltage (VscH).

2. The power supply (610) of claim 1, wherein the converter (6124) includes:
a pulse width modulation controller (61242) adapted to convert the first voltage (Vin) in response to a level of a sixth voltage (FB), and to output an AC voltage;
a converter output unit (61244) connected to the pulse width modulation controller (61242), the converter output unit (61244) having a fourth coil (L4) configured to receive the AC voltage at a first terminal of the fourth coil (L4) and a first capacitor (C5) having a first terminal connected to a second terminal of the fourth coil (L4), the fourth coil (L4) and the first capacitor (C5) being adapted to rectify the AC voltage and to generate the fourth voltage (VscH); and
a converter feedback signal generator (61246) adapted to generate the sixth voltage (FB) from the fourth voltage (VscH) and to transmit the sixth voltage (FB) to the pulse width modulation controller (61242).

3. The power supply (610) of one of the claims 1 or 2, further comprising:
a power supply feedback signal generator (614) connected to the first output unit (6122) and to the second output unit (613), the power supply feedback signal generator (614) being adapted to receive the third voltage and the fifth voltage and to generate a feedback signal; and
a switching controller (615) connected between the power supply feedback signal generator (614) and the power supply unit (611), the switching controller (615) being adapted to control a turn-on/off operation of the switching transistor (Qsw) in response to the feedback signal.

4. The power supply of one of the preceding claims, wherein the fifth voltage is lower than the first voltage.

5. The power supply of one of the preceding claims, wherein the first voltage is a ground voltage.

6. The power supply of one of the preceding claims, wherein the sixth voltage is lower than the first voltage.

7. A plasma display device comprising:
first electrodes, second electrodes, and third electrodes formed in a direction crossing the first electrodes and the second electrodes;
a sustain electrode driver (500) adapted to drive the first electrodes;
a scan electrode driver (400) adapted to drive the second electrodes;
an address electrode driver (300) adapted to drive the third electrodes;
a controller (200) adapted to control the sustain electrode driver (500), the scan electrode driver (400), and the address electrode driver (300); and
a power supply (610) according to one of the preceding claims and adapted to supply power to the sustain electrode driver (500), the scan electrode driver (400), and the address electrode driver (300).

8. The plasma display device of claim 7,
wherein the input voltage of the power supply (610) is a seventh voltage higher than an eighth voltage, and
wherein the seventh voltage and the eighth voltage are alternately applied to the first electrodes during a sustain period.

9. The plasma display device of one of the claims 7 or 8,
wherein the fifth voltage is a scan voltage sequentially applied to the first electrodes during an address period.
